# EUROPÄISCHE PATENTSCHRIFT

(11) **EP 2 058 085 B1**
(45) Veröffentlichungstag und Bekanntmachung des Hinweises auf die Patenterteilung: **06.04.2011**
(21) Anmeldenummer: 07120261.8
(22) Anmeldetag: 08.11.2007
(51) Int. Cl.: B23Q 11/12, H02K 9/22, B23Q 5/10

(54) **Wellenkühlung für eine Werkzeug-Motorspindel**
Shaft cooling for a machine tool motor spindle
Refroidissement d'arbre pour une broche à moteur d'outil

(43) Veröffentlichungstag der Anmeldung: 13.05.2009
(73) Patentinhaber: Step-Tec AG, 4542 Luterbach (CH)
(72) Erfinder: Schneider, Kurt, 2565 Jens (CH); Steffen, Dominique, 4513 Langendorf (CH)
(74) Vertreter: De Colle, Piergiacomo

(56) Entgegenhaltungen:
- EP-A- 0 458 499
- EP-A- 1 736 277
- JP-A- 1 087 130
- US-B1- 6 398 468

## Beschreibung

Die Erfindung betrifft eine Wellenkühlung für eine Werkzeug-Motorspindel mit einer rotierenden Welle, einer statischen Lanze und mindestens einem einen Kühlmitteleingang und einen Kühlmittelausgang aufweisenden Kühlkreislauf, wobei die Wellenkühlung derart ausgebildet ist, dass die Einbringung des Kühlmediums in der statischen Lanze von innen nach aussen in die rotierende Welle über Kühlbohrungen erfolgt.

Die Werkzeug-Motorspindeln werden mit hohen Drehzahlen betrieben. Diese hohen Drehzahlen stellen an die Lageranordnung, über die die Spindel in dem Spindelgehäuse um ihre Spindelachse drehbar gelagert ist, hohe Anforderungen. Insbesondere muss die Lagerreibung auf ein absolutes Minimum reduziert werden, um Wärmeentwicklung und Verschleiss zu reduzieren. Daher ist es erforderlich eine Wellenkühlung vorzusehen.

Die EP 0 458 499 A2 beschreibt eine derartige Wellenkühlung für eine Werkzeug-Motorspindel mit einer rotierenden Welle, einer statischen Lanze und mindestens einem Kühlmitteleingang und einem Kühlmittelausgang aufweisenden Kühlkreislauf. Die Einbringung des Kühlmediums in der statischen Lanze erfolgt von innen nach aussen in die rotierende Welle über Kühlbohrungen.

Eine derartige Wellenkühlung ist in der WO 2006/018394 A1 beschrieben. Hier wird eine Spindelvorrichtung mit einer Welleneinrichtung und einer Kühleinrichtung beschrieben. Die Kühleinrichtung weist mindestens einen Konvektionsspalt, über den gezielt ein wesentlicher Teil an Verlustwärme von der Welleneinrichtung abführbar ist.

Weiterhin sind Werkzeug-Motorspindeln bekannt, die zur Abführung der Verlustleistung aussengekühlt sind.

Die an diesen bekannten Wellenkühlungen bestehenden Nachteile bestehen insbesondere darin, dass infolge der nicht genügenden Kühlwirkung ein aufgrund der Wärmeausdehnung nicht genügend reduziertes Wellenwachstum entsteht.

Somit besteht die Aufgabe der Erfindung darin, eine Wellenkühlung vorzuschlagen, die einerseits ein Längenwachstum der Welle auf ein Minimum reduziert und andererseits aufgrund des geringen Längenwachstums eine hohe Messgenauigkeit beim Ausmessen des Werkstückes gewährleistet.

Erfindungsgemäss wird diese Aufgabe dadurch gelöst, dass mehrere Lippendichtungen aussen dichtend an der stehenden, das Kühlmedium liefernden Lanze angeordnet sind und den Vor- und Rücklauf des Kühlmediums zwischen der Welle und der Lanze von einander abgrenzt.

In den folgenden Zeichnungen ist ein erfindungsgemässes Ausführungsbeispiel dargestellt. Es zeigen:
Fig. 1 eine Schnittzeichnung einer wellengekühlten Werkzeug-Motorspindel,
Fig. 2 eine Schnittdarstellung A - A des hinteren Teils der Lanze,
Fig. 3 eine Schnittdarstellung B - B des vorderen Teils der Welle,
Fig. 4 eine Schnittzeichnung des vorderen Lanzenteils,
Fig. 5 eine Schnittzeichnung der Lippendichtungen,
Fig. 6 eine Schnittzeichnung zur Darstellung der Werkzeugkonus-Reinigung und der Sperrluft,
Fig. 7 eine Schnittzeichnung der Leckagen/Werkzeuginnenkühlung mit innenliegender Drehdurchführung und
Fig. 8 eine Schnittzeichnung der Leckagen/Werkzeuginnenkühlung mit aussenliegender Drehdurchführung.

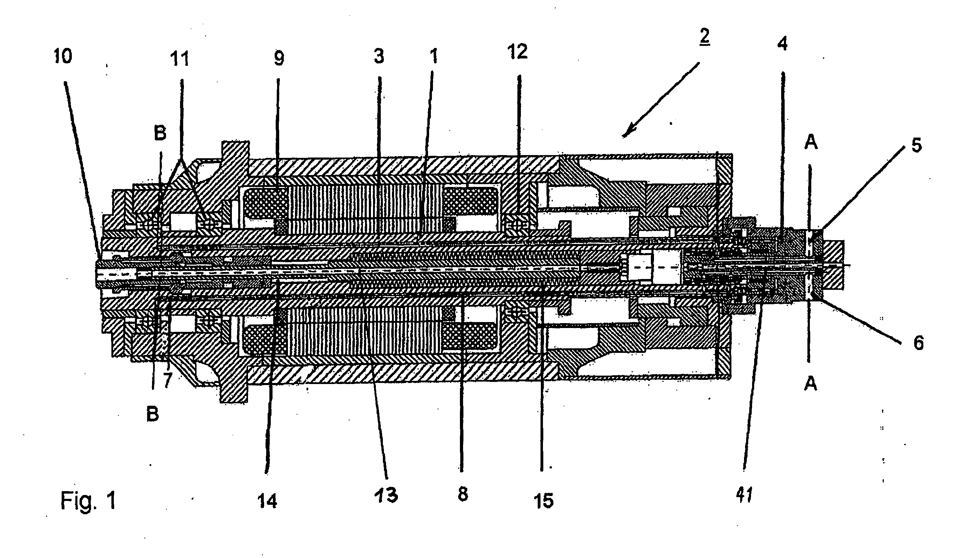

Die Fig. 1 zeigt eine Werkzeug-Motorspindel 2 in Schnittansicht. Ein in einer Spindelhülse eingelassener Stator 9, in der Regel eine 3-phasige Motorwicklung, treibt einen auf einer durchgehenden Welle 3 angebrachten Rotor an. Die Welle 3 ist als Hohlwelle ausgebildet und mehrfach in einer Spindelhülse über ein vorderes 11 und ein hinteres 12 Lager gelagert. Weiterhin ist die Welle 3 mit einer mitdrehenden Spannvorrichtung, bestehend aus einem Werkzeugspanner 15 und einer Spannzange 10, ausgerüstet und in der Wellenbohrung 14 eingebracht. Diese Spannvorrichtung dient zum Einspannen eines Bearbeitungswerkzeuges mittels einer Spannzange 10. Das in der Figur nicht dargestellte Bearbeitungswerkzeug wird über einen Motor in Drehung versetzt. Durch die Bohrung 13 des Werkzeugspanners 15 wird einerseits Kühlmittel zur Innenkühlung des Werkzeugs geführt, andererseits wird durch die Welle 3 auch Druckluft zur Reinigung der Werkzeugschnittstelle geleitet. Die Welle 3 weist Kühlbohrungen 8 auf, die Bestandteile der Wellenkühlung 1 darstellen.

Durch die mit einer Zentralbohrung 41 ausgestatteten Lanze 4 werden sämtliche erwähnten Medien in die rotierende Welle 3 eingebracht. Das Kühlmedium wird zu Beginn des Kühlkreislaufs 7 in den Kühlmitteleingang 5 eingeleitet und tritt nach der Kühlung aus dem Kühlmittelausgang 6 aus.

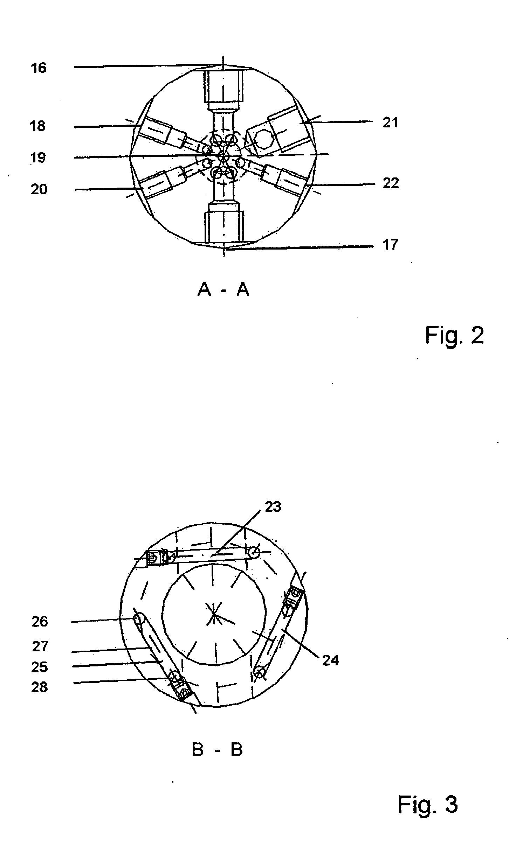

Der Schnitt A - A von Fig. 1 ist in Fig. 2 dargestellt. In diesem Beispiel werden vier Medien eingespiesen oder abgezogen. Mit 16 wird der Kühlmittelvorlauf und mit 17 der Kühlmittelrücklauf bezeichnet. Die Kühlmittelleckage wird über den Anschluss 18 abgezogen. Die Anschlüsse 19 und 20 dienen der Zuführung der Werkzeuginnenkühlung (Kühlschmiermittel) bzw. der Abführung der Leckage des Kühlschmiermittels. Die Kegelreinigungsluft wird in den Eingang 21 zugeführt. Zur Abdichtung des Systems wird über die Leitung 22 die Sperrluft eingespiesen.

Beispielhaft ist in Fig. 3 der vordere Wellenteil im Schnitt B - B gezeigt. Die Welle 3 ist in dieser Ausführungsform mit drei Kühlkreislaufschlaufen 23, 24 und 25 aussermittig und symmetrisch verteilt angeordnet. Alle drei Kühlschlaufen 23, 24 und 25 sind mit einer nach vorne laufenden achsparallelen Bohrung 26 und mit einer gleichen daneben liegenden zweiten Rückführbohrung 28 ausgeführt. Diese beiden Bohrungen 26 und 28 sind im vordersten Wellenbereich mit einer einseitig verschlossenen Querbohrung 27 miteinander verbunden, was eine Kühlschlaufe im Kühlkreislauf 7 darstellt.

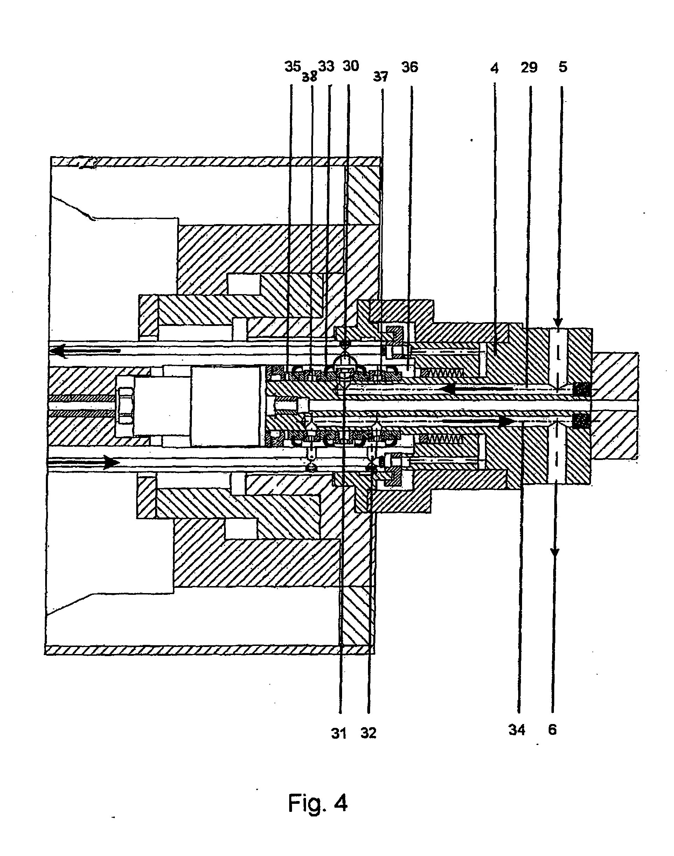

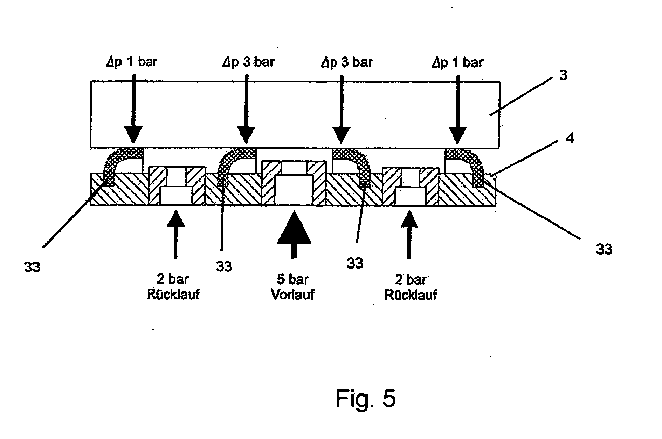

Fig. 4 zeigt in Schnittansicht das Kühlsystem im vorderen Teil der Lanze 4. Ein von einem Kühlgerät gefördertes und temperiertes Kühlmedium, beispielsweise Wasser angereichert mit chemischen Haltbarkeitszusätzen, wird unter Druck an den Anschluss 5 der stehenden, auf den hinteren Spindelflansch aufgeschraubten Lanze 4 eingespiesen. Das Kühlmedium wird zuerst durch zwei parallel laufende Bohrungen 29 in den Übergabebereich 30 gebracht. Die radiale Übergabe erfolgt am Ende der Bohrungen 29 in eine flächengleiche Bohrung 31, senkrecht zur Längsachse. Das nun aus dem stehenden Teil austretende Kühlwasser gelangt über den sich zwischen den Lippendichtungen 33 ergebenden Umlauf in die drei um 120° verteilten Vorlaufbohrungen 26 (siehe Fig. 3) der Welle 3. Dabei verstärkt das unter Druck austretende Kühlmedium das Dichtverhalten der aussen dichtenden Lippendichtungen 33 gegenüber der rotierenden Welleninnenkontur. Im Bereich 30 der radialen Übergabe des Kühlmediums erfährt dieses infolge der Zentrifugalkraft durch die rotierende Welle 3 eine zusätzliche Beschleunigung. Die Ausnutzung dieser physikalischen Eigenschaft ist der Schlüssel zur Verwirklichung der Medienübergabe aus dem statischen in den dynamischen Teil. Das Kühlmedium in den Vorlaufbohrungen 31 gelangt über die Umkehrschlaufen (Querbohrungen 27 (Fig. 3) im vordersten Wellenteil) in die Rücklaufbohrungen 32. Im Bereich der Lanze 4 erfolgt die radiale Übergabe vom rotierenden Teil in den stehenden Teil, indem das Kühlmedium über zwei Umläufe 37, 38 in zwei senkrecht zur Längsachse liegenden Bohrungen 31, 32 in zwei parallel laufende Rücklaufbohrungen 34 gelangt. Der Einbau der Lippendichtungen 33 ergibt für den Rücklauf naturgemäss eine unterschiedliche Anordnung, mit einer theoretisch höheren Leckage an der der Druckkammer abgewandten Dichtung. Um dem vorzubeugen sind in diesem Beispiel zwei radiale Übergaben zwecks Druckhalbierung des ohnehin reduzierten Rückführdruckes vorgesehen. Diese symmetrische Dichtungsanordnung (Hochdruckzuführung beidseitig umschlossen mit zwei Niederdruckrückführungen) dient der zusätzlichen Benetzung der Dichtflächen der nach innen gewandten Lippendichtungen 33. Dies führt infolge der Schmierwirkung zu einer erhöhten Lebensdauer der unter höherem Druck stehenden Vorlaufdichtungen, wie unten in Fig. 5 beschrieben. Das Leckagekühlmedium wird über die Umläufe 35 und über eine eigene Rückführung aus der Lanze 4 gebracht. Die Leckage des Kühlmittels gelangt in den Umlauf 36. Die Rückführung des Kühlmediums in das Kühlgerät erfolgt schliesslich über den Anschluss 6.

In der Fig. 5 wird die im Unteranspruch 9 beanspruchte Dichtungssymmetrie der Lippendichtungen 33 dargestellt. Zwischen der rotierenden Welle 3 und der stehenden Lanze 4 sind an der Lanze 4 die Lippendichtungen 33 angebracht. Die beiden äusseren Lippendichtungen 33 werden mit einem niedrigeren Druck (1 bar) als die beiden inneren Lippendichtungen 33 (3 bar) beaufschlagt. Durch die im Beispiel auftretenden Vor- und Rücklaufdrücke ergeben sich unterschiedliche Differenzdrücke, welche sich an den aussen dichtenden Lippen 33 einstellen. Durch diese symmetrische Anordnung werden die höher beanspruchten innen liegenden Lippendichtungen 33 geschmiert und gekühlt, was zu einer Erhöhung der Lebensdauer führt.

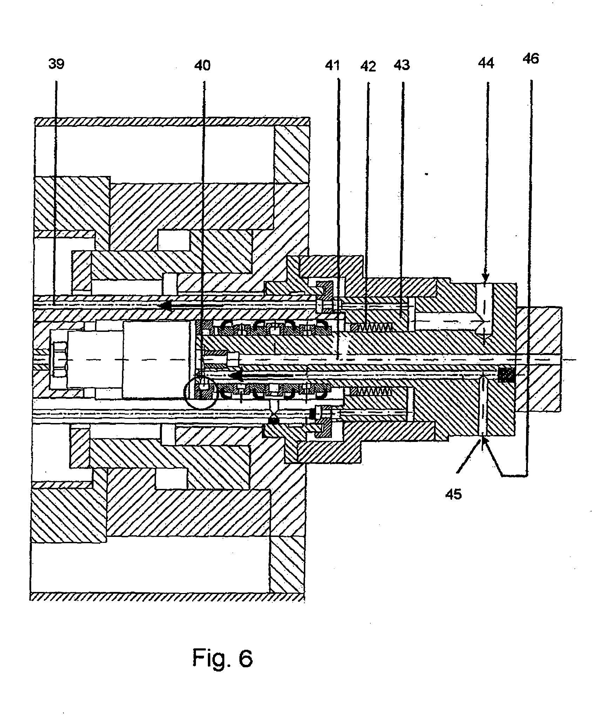

Die Fig. 6 zeigt die Führung der Kegelreinigungsluft sowie der Sperrluft in der Werkzeug-Motorspindel. Die Kegelreinigungsluft wird über den Anschluss 44 der mit einer Zentralbohrung 41 versehenen Lanze 4 eingespiesen. Diese dient für das Ausblasen des Werkzeugkonus und wird nur bei still stehender Spindel eingeschaltet. Bei rotierender Spindel wird der Kegelreinigungskolben 43 durch die Druckfeder 42 von der rotierenden Dichtfläche der Welle 3 abgehoben. Im Stillstand vermag der Kegelreinigungsluftdruck den Kolben 43 nach vorne zu bewegen, um der Luft die Passage in die Kegelreinigungsbohrung 39 der Welle 3 freizulegen. Die Sperrluft 45, eingespiesen an den Anschluss 46 dient der Abdichtung der Lanze 4 gegenüber den Aussenbereichen. Die beiden Leckagemedien (Kühlmedium und Kühlschmiermittel) sind wegen ihrer unterschiedlicher chemischen Zusammensetzung mit Hilfe der Sperrluft zu trennen. Die radiale Übergabe der Sperrluft erfolgt am Ende der Bohrung 40 über den Umlauf und die kleine Bohrung nach beiden Seiten der Welle 3. Dieser Überdruck sorgt dafür, dass einerseits kein Leckagekühlwasser in das Welleninnere gelangt und anderseits kein Leckagekühlschmiermittel in den Bereich der Lanze 4 eindringt.

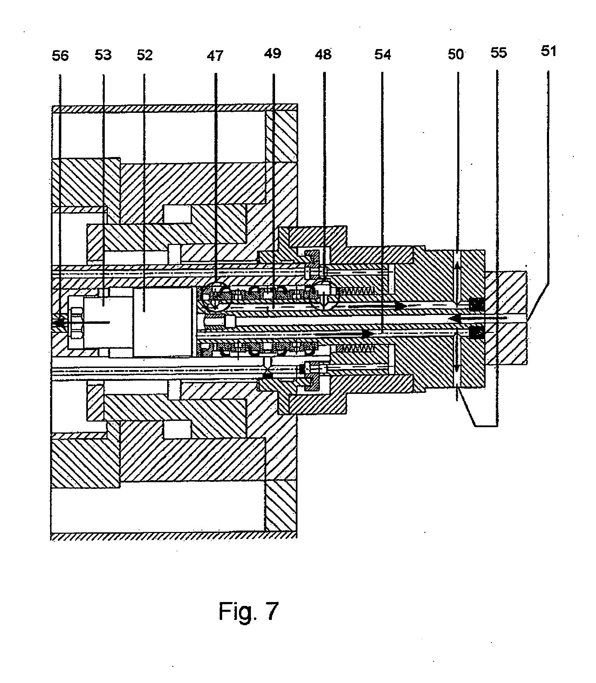

Die Leckagenführung und die Werkzeuginnenkühlung sind in Fig. 7 gezeigt. Die durch die äusseren Lippendichtungen 33 entweichende Leckage des Kühlwasserrückflusses sammelt sich im Bereich der Umläufe 47 und 48. Die radiale Rückführung der Leckage erfolgt durch die zwei Querbohrungen, welche senkrecht in die axiale Leckagebohrung 49 münden.
Die Leckage des Kühlwassers wird schliesslich über den Anschluss 50 in das Kühlgerät zurückgeführt.
Über den Anschluss 51 wird Kühlschmiermittel für die Werkzeuginnenkühlung eingespiesen. Dieses wird durch die stehende Lanze 4 an den stehenden Teil 52 einer bereits vorhandenen eingebauten Drehdurchführung übergeben. Das Kühlschmiermittel wird schliesslich durch den rotieren Teil 53 dieser Drehdurchführung durch den restlichen Wellenteil nach vorne zur Werkzeugschnittstelle über die Bohrung 56 geleitet.

Austretendes, bzw. rückgestautes Kühlschmiermittel aus der Drehdurchführung wird als Leckage über die axial verlaufende Leckagebohrung 54 nach hinten geleitet und über den Anschluss 55 aus der Lanze 4 geführt.

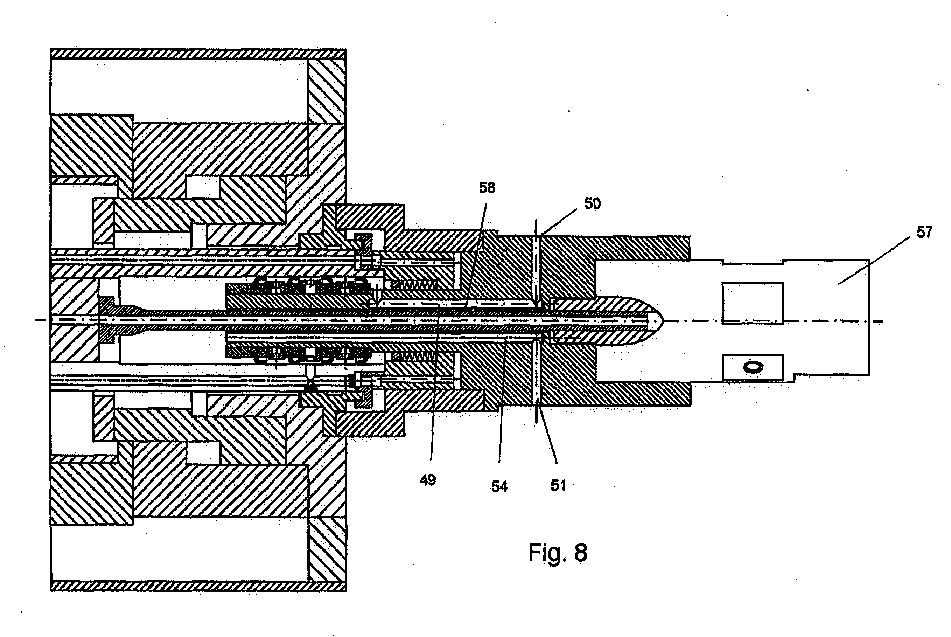

Die Fig. 8 zeigt eine beispielhafte Variante der Wellenkühlung. Diese Wellenkühlung weist im Gegensatz zu Fig. 7, die eine innere Dreheinführung 52, 53 zeigt, eine äussere Drehzuführung 57 auf. Diese Drehzuführung 57 ist ohne Ausbau der ganzen Lanze 4 auswechselbar. Die Sperrluftabtrennung zwischen dem Innenkühlmedium und dem Wellenkühlmedium entfällt. Mit der Bezugszahl 58 ist die Werkzeuginnenkühlung bezeichnet.

Der Zweck und die daraus resultierenden Vorteile der Kühlung der rotierenden Welle ist einerseits eine "kühle Welle" zu haben, was das unter Temperaturzuwachs entstehende Längenwachstum auf ein Minimum begrenzt. Dies führt zu gesteigerter Bearbeitungsqualität eines jeden Bearbeitungszentrums, wo diese erfindungsgemässe Motorspindel eingebaut ist. Der zweite Vorteil dieses reduzierten Längenwachstums der Welle, bzw. der Werkzeugaufnahme gegenüber der Spindelnase ist eine gesteigerte Messgenauigkeit beim Ausmessen von Werkstücken. Dies ermöglicht das Einsetzen von 3-D Tastern in die "kühle" Werkzeugschnittstelle, ohne dass der empfindliche Messtaster durch eine zu warme Welle mitwachsen würde, was zu hoch genauen Messergebnissen führt. Auf Grund der geringeren Temperaturdifferenz zwischen Welle und Lagergehäuse lassen sich die Lager mit einem engeren Toleranzband auslegen, was zu höherer Steifigkeit im Betrieb und zu einer gesteigerten Lebensdauer der Motorspindel führt.

### Bezugszeichenliste:

- 1: Wellenkühlung
- 2: Werkzeug-Motorspindel
- 3: Welle
- 4: Lanze
- 5: Kühlmitteleingang
- 6: Kühlmittelausgang
- 7: Kühlkreislauf
- 8: Kühlbohrungen
- 9: Stator
- 10: Spannzange
- 11: vorderes Lager
- 12: hinteres Lager
- 13: Zentralbohrung
- 14: Wellenbohrung
- 15: Werkzeugspanner
- 16: Kühlmittelvorlauf
- 17: Kühlmittelrücklauf
- 18: Kühlmittelleckage
- 19: Werkzeuginnenkühlung
- 20: Leckage für Werkzeuginnenkühlung
- 21: Werkzeugreinigungsfuft
- 22: Sperrluft
- 23: Kühlkreislaufschlaufe
- 24: Kühlkreislaufschlaufe
- 25: Kühlkreislaufschlaufe
- 26: Bohrung für Vorlauf
- 27: Querbohrung
- 28: Bohrung für Rücklauf
- 29: Bohrung
- 30: Übergabebereich
- 31: Bohrung
- 32: Rücklaufbohrung
- 33: Lippendichtung
- 34: Rücklaufbohrung
- 35: Leckage Kühlwasser
- 36: Leckage Kühlmittel
- 37: Bohrung
- 38: Rücklauf
- 39: Kegelreinigungsbohrung
- 40: Bohrung
- 41: Zentralbohrung
- 42: Druckfeder
- 43: Kolben
- 44: Einspeisung Kegelreinigung
- 45: Einspeisung Sperrluft
- 46: Anschluss
- 47: Umlauf
- 48: Umlauf
- 49: Leckagebohrung Kühlwasser
- 50: Anschluss
- 51: Anschluss
- 52: Drehdurchführung
- 53: Drehdurchführung
- 54: Leckagebohrung
- 55: Anschluss
- 56: Bohrung
- 57: Drehzuführung
- 58: Werkzeuginnenkühlung

## Patentansprüche

1. Wellenkühlung (1) für eine Werkzeug-Motorspindel (2) mit einer rotierenden Welle (3), einer statischen Lanze (4) und mindestens einem einen Kühlmitteleingang (5) und einen Kühlmittelausgang (6) aufweisenden Kühlkreislauf (7), wobei die Wellenkühlung (1) derart ausgebildet ist, dass die Einbringung des Kühlmediums in der statischen Lanze (4) von innen nach aussen in die rotierende Welle (3) über Kühlbohrungen (8) erfolgt **dadurch gekennzeichnet, dass** mehrere Lippendichtungen (33) aussen dichtend an der stehenden, das Kühlmedium liefernden Lanze (4) angeordnet sind und den Vor- und Rücklauf des Kühlmediums zwischen der Welle (3) und der Lanze (4) von einander abgrenzt.

2. Wellenkühlung nach Anspruch 1, **dadurch gekennzeichnet, dass** die feststehende Lanze (4) eine durchgehende Zentralbohrung (13, 41) aufweist.

3. Wellenkühlung nach Anspruch 1 oder 2, **dadurch gekennzeichnet, dass** die Welle (3) durch mehrere Kühlbohrungen (8) mit dem Kühlmedium kühlbar ist.

4. Wellenkühlung nach mindestens einem der Ansprüche 1, 2 oder 3, **dadurch gekennzeichnet, dass** in die Lanze (4) mehrere Medien einspeisbar sind.

5. Wellenkühlung nach mindestens einem der vorherigen Ansprüche, **dadurch gekennzeichnet, dass** das System mittels Sperrluft (22, 45) abdichtbar ist.

6. Wellenkühlung nach mindestens einem der vorherigen Ansprüche, **dadurch gekennzeichnet, dass** der Kühlkreislauf (7) mehrere Kreislaufschlaufen (23, 24, 25) aufweist.

7. Wellenkühlung nach mindestens einem der vorherigen Ansprüche, **dadurch gekennzeichnet, dass** das Kühlmittel infolge der rotierenden Welle (3) mit einer Zentrifugalkraft beaufschlagbar und somit nach aussen transportierbar ist.

8. Wellenkühlung nach mindestens einem der vorherigen Ansprüche, **dadurch gekennzeichnet, dass** die Lippendichtungen (33) symmetrisch angeordnet sind.

## Claims

1. Shaft cooling system (1) for a tool motor spindle (2), comprising a rotating shaft (3), a static lance (4) and at least one cooling circuit (7) having a coolant intake (5) and a coolant outlet (6), the shaft cooling system (1) being realized in such a way that feeding of the cooling medium into the static lance (4) is effected from the inside outwards into the rotating shaft (3) via cooling bores (8), **characterized in that** a plurality of lip-seals (33) are arranged in an externally sealing manner on the stationary lance (4) that supplies the cooling medium and delimit the forward and return flow of the cooling medium from each other between the shaft (3) and the lance (4).

2. Shaft cooling system according to Claim 1, **characterized in that** the stationary lance (4) has a through central bore (13, 41).

3. Shaft cooling system according to either of Claims 1 or 2, **characterized in that** the shaft (3) can be cooled by means of the cooling medium, through a plurality of cooling bores (8).

4. Shaft cooling system according to at least one of Claims 1, 2 or 3, **characterized in that** a plurality of media can be fed into the lance (4).

5. Shaft cooling system according to at least one of the preceding claims, **characterized in that** the system can be sealed by means of sealing air (22, 45).

6. Shaft cooling system according to at least one of the preceding claims, **characterized in that** the cooling circuit (7) has a plurality of circuit loops (23, 24, 25).

7. Shaft cooling system according to at least one of the preceding claims, **characterized in that**, owing to the rotating shaft (3), the coolant can be subjected to a centrifugal force and can thus be transported outwards.

8. Shaft cooling system according to at least one of the preceding claims, **characterized in that** the lip-seals (33) are arranged symmetrically.

## Revendications

1. Refroidissement d'arbre (1) pour broche à moteur d'outil (2) comprenant un arbre rotatif (3), une lance statique (4) et au moins un circuit de refroidissement (7) présentant une entrée de réfrigérant (5) et une sortie de réfrigérant (6), le refroidissement d'arbre (1) étant réalisé de telle sorte que l'introduction du fluide de refroidissement dans la lance statique (4) s'effectue depuis l'intérieur vers l'extérieur dans l'arbre rotatif (3) par le biais d'alésages de refroidissement (8), **caractérisé en ce que** plusieurs garnitures d'étanchéité à lèvre (33) sont disposées à l'extérieur de manière hermétique contre la lance fixe (4) fournissant le fluide de refroidissement et séparent l'écoulement aller de l'écoulement de retour du fluide de refroidissement entre l'arbre (3) et la lance (4).

2. Refroidissement d'arbre selon la revendication 1, **caractérisé en ce que** la lance fixe (4) présente un alésage central traversant (13, 41).

3. Refroidissement d'arbre selon la revendication 1 ou 2, **caractérisé en ce que** l'arbre (3) peut être refroidi avec le fluide de refroidissement par plusieurs alésages de refroidissement (8).

4. Refroidissement d'arbre selon au moins l'une quelconque des revendications 1, 2 ou 3, **caractérisé en ce que** plusieurs fluides peuvent être injectés dans la lance (4).

5. Refroidissement d'arbre selon au moins l'une quelconque des revendications précédentes, **caractérisé en ce que** le système peut être rendu étanche au moyen d'air d'étanchéité (22, 45).

6. Refroidissement d'arbre selon au moins l'une quelconque des revendications précédentes, **caractérisé en ce que** le circuit de refroidissement (7) présente plusieurs boucles de circuit (23, 24, 25).

7. Refroidissement d'arbre selon au moins l'une quelconque des revendications précédentes, **caractérisé en ce que** le réfrigérant peut être sollicité du fait de la rotation de l'arbre (3) par une force centrifuge et peut ainsi être transporté vers l'extérieur.

8. Refroidissement d'arbre selon au moins l'une quelconque des revendications précédentes, **caractérisé en ce que** les garnitures d'étanchéité à lèvre (33) sont disposées symétriquement.
